# FASCICULE DE BREVET EUROPEEN

(11) **EP 2 633 290 B1**
(45) Date de publication et mention de la délivrance du brevet: **13.10.2021**
(21) Numéro de dépôt: 11776773.1
(22) Date de dépôt: 27.10.2011
(51) Int. Cl.: G01N 21/05, G01N 21/03, G01N 21/15, G01N 21/71

(54) **CELLULE DE CARACTERISATION POUR ANALYSE DE FUMEE**
CHARAKTERISIERUNGSZELLE FÜR RAUCHANALYSE
SMOKE ANALYSIS CHARACTERIZATION CELL

(30) Priorité: 27.10.2010 FR 1058851
(43) Date de publication de la demande: 04.09.2013
(73) Titulaire: Commissariat à l'Énergie Atomique et aux Énergies Alternatives, 75015 Paris (FR)
(72) Inventeur: MASKROT, Hicham, F-91310 Montlhery (FR); SIRVEN, Jean-Baptiste, F-75014 Paris (FR); DEWALLE, Pascale, F-27200 Vernon (FR); GUIZARD, Benoît, F-94000 Creteil (FR)
(74) Mandataire: Regimbeau
(86) Numéro de dépôt international: PCT/EP2011/068900
(87) Numéro de publication internationale: WO 2012/055978

(56) Documents cités:
- US-A- 4 443 072
- US-A1- 2007 075 051
- DEWALLE P: "Caractérisation des aérosols émis par interaction laser-matière dans le cadre d'expériences de décapage de peintures par laser", 10 avril 2009 (2009-04-10), Institut de radioprotection et de sûretè nucléare, France, XP002627291, pages 1-49, page 28, ligne 3 - page 29, ligne 3; figures 2.3-2.4
- AMODEO T ET AL: "On-line determination of nanometric and sub-micrometric particle physicochemical characteristics using spectral imaging-aided Laser-Induced Breakdown Spectroscopy coupled with a Scanning Mobility Particle Sizer", SPECTROCHIMICA ACTA. PART B: ATOMIC SPECTROSCOPY, NEW YORK, NY, US, US, vol. 64, no. 10, 1 octobre 2009 (2009-10-01), pages 1141-1152, XP026676774, ISSN: 0584-8547, DOI: DOI:10.1016/J.SAB.2009.07.031 [extrait le 2009-08-08]
- AMODEO T ET AL: "On-line monitoring of composite nanoparticles synthesized in a pre-industrial laser pyrolysis reactor using Laser-Induced Breakdown Spectroscopy", SPECTROCHIMICA ACTA. PART B: ATOMIC SPECTROSCOPY, NEW YORK, NY, US, US, vol. 63, no. 10, 1 octobre 2008 (2008-10-01), pages 1183-1190, XP025644503, ISSN: 0584-8547, DOI: DOI:10.1016/J.SAB.2008.09.005 [extrait le 2008-09-18]

## Description

L'invention concerne le domaine de l'analyse en ligne de matériau. Le matériau analysé à l'aide de ce moyen peut être sous la forme d'un aérosol ou d'un gaz chargé de particules constituantes de ce matériau formant ainsi une fumée.

Plus particulièrement, l'invention concerne le domaine des systèmes d'analyse optique pour l'étude des particules formées par pyrolyse à l'intérieur d'une cellule de caractérisation.

### Arrière plan technologique

La cellule objet de l'invention peut-être associé à divers moyens de caractérisation connus tels que :
- la fluorescence induite par laser ;
- la spectrométrie de fluorescence ;
- la spectrométrie d'absorption ;
- la spectrométrie Raman ;
- la spectrométrie infrarouge.

A titre d'exemple non limitatif, la description ci-dessous est basée sur l'utilisation de la spectrométrie sur plasma induit par laser, ou analyse LIBS (« *laser-induced breakdown spectroscopy* » en anglais). Cette méthode consiste à focaliser un faisceau laser impulsionnel dans un mélange réactionnel à analyser et à former un plasma dont on fait l'analyse par spectrométrie d'émission. Ceci permet de déterminer la composition dudit mélange réactionnel. Cette technique est appliquée dans la description ci-dessous au contrôle des fumées issues de la production de particules nanométriques par pyrolyse laser.

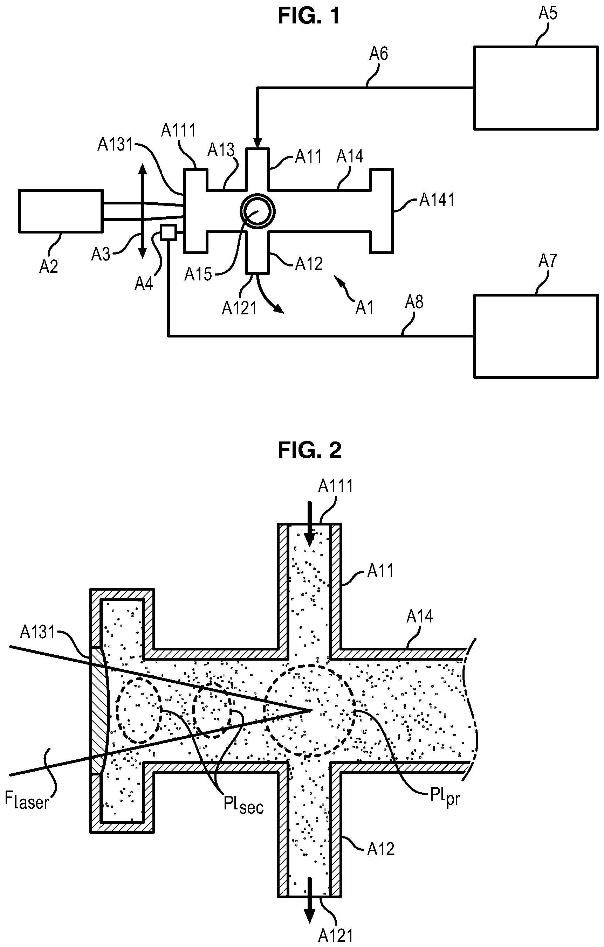

Un système LIBS pour une analyse LIBS est illustré par la figure 1 et comprend un réacteur **A5** de synthèse de nanoparticules, une cellule LIBS **A1**, un laser **A2** pour émettre un faisceau laser, une lentille **A3** pour faire converger le faisceau laser à l'intérieur de la cellule LIBS **A1**, un système optique **A4** pour collecter des signaux provenant de la cellule LIBS **A1**, et un spectromètre **A7.**

La production de particules nanométriques au sein du réacteur **A5** repose sur l'interaction en flux croisés entre un faisceau émis par un laser, par exemple un laser de puissance à dioxyde de carbone CO₂, et un mélange réactionnel. Le faisceau excite des états vibrationnels des molécules (dites précurseurs) du mélange réactionnel. L'énergie qui a été transmise du faisceau aux molécules est redistribuée par collision à l'ensemble du mélange réactionnel. On observe une élévation très rapide de la température du mélange réactionnel qui induit la décomposition thermique des molécules. On obtient alors une vapeur dite « sursaturée » en radicaux et en énergie. Des nanoparticules se forment ensuite par germination homogène à partir des radicaux. Par un phénomène de croissance par collision/coalescence les nanoparticules croissent.

La dissociation et la formation des nanoparticules ont lieu dans un volume de recouvrement entre le faisceau et le flux du mélange réactionnel observable grâce à la production d'une flamme à cet endroit.

Lorsque les nanoparticules sortent de ce volume, elles subissent un effet de trempe qui arrête leur croissance.

Les nanoparticules sont ensuite amenées dans la cellule LIBS **A1** par un conduit d'entrée **A6**.

La cellule LIBS **A1** comprend une chambre de réaction et quatre bras :
- un premier bras **A11** formant orifice d'entrée **A111** pour la fumée ;
- un deuxième bras **A12** faisant face au premier et formant orifice de sortie **A121** pour l'évacuation de la fumée ;
- un troisième bras **A13** fermé par un hublot **A131** par lequel entre le faisceau laser destiné à former un plasma ; et
- un quatrième bras **A14** fermé par un cache **A141** et faisant face au troisième bras **A13** n'est pas utilisé.

La cellule LIBS **A1** comprend également un hublot **A15** de visualisation pour observer le plasma à l'œil nu.

Dans la cellule LIBS **A1**, les nanoparticules se comportent comme un gaz et se répandent donc à l'intérieur de la chambre de réaction et y occupent tout l'espace disponible en formant une fumée.

A l'intérieur de la chambre de réaction, le faisceau laser **Fₗₐₛₑᵣ** généré par le laser **A2** est focalisé par la lentille **A3**. Lorsque le faisceau laser **Fₗₐₛₑᵣ** est focalisé dans le mélange à analyser, il y a vaporisation des nanoparticules provoquant l'éjection d'atomes et formant un plasma qui s'étend. Lors de l'expansion du plasma, les atomes se désexcitent provoquant l'émission d'une lumière. Cette lumière est ensuite reçue par le système optique **A4** adapté et placé du même côté que le laser **A2.** Cette lumière est ensuite analysée par le spectromètre **A7** relié au système optique **A4** par une fibre optique **A8** adaptée pour transporter le signal.

Un inconvénient de cette cellule LIBS résulte du fait que les nanoparticules se comportent comme un gaz au sein de la chambre de réaction. C'est pourquoi le hublot d'analyse **A131** du troisième bras **A13** s'encrasse. Le hublot d'analyse **A131** encrassé agit comme un filtre qui bloque une partie du faisceau laser **Fₗₐₛₑᵣ.** Toute l'énergie du faisceau laser **F**ₗₐₛₑᵣ n'est donc pas efficace et seule une partie sert à former le plasma. Le plasma formé est donc moins énergétique et émet un signal plus faible. Ce signal déjà affaibli est encore atténué lorsqu'il retraverse le hublot d'analyse **A131** du troisième bras vers le système optique **A4**.

Un autre inconvénient, toujours lié au comportement gazeux de la fumée, est l'encrassement du hublot **A15** de visualisation tendant à entraver l'observation du plasma à l'œil nu.

Encore un autre inconvénient est que le plasma formé n'est pas limité à l'endroit de focalisation du faisceau laser **Fₗₐₛₑᵣ**, et donc là où celui-ci est le plus concentré. En effet, comme des particules sont présentes dans toute la chambre de réaction, des plasmas secondaires **PI_{sec}** peuvent se former entre le point de focalisation du faisceau laser, où se forme le plasma principal **PIₚᵣ**, et le hublot d'analyse **A131** par lequel le faisceau laser **Fₗₐₛₑᵣ** entre à l'intérieur de la chambre de réaction comme illustré sur la figure 2. Les plasmas secondaires **PI_{sec}** peuvent se situer en dehors de la zone d'observation par le système optique **A4.**

Un autre inconvénient de la cellule LIBS **A1** ci-dessus est l'instabilité des signaux acquis par le système optique **A4** et par le spectromètre **A7** dont l'origine est multiple.

L'article AMODEO T ET AL. « On-line monitoring of composite nanoparticles synthesized in a pre-industrial laser pyrolises reactor using Laser-Induced Breakdown Spectroscopy », SPECTROCHIMICA ACTA., PART B: ATOMIC SPECTROSCOPY, NEW YORK, US, US, vol. 63, no 10, 1 octobre 2008 (2008-10-01), pages 1183-1190, XP025644503 décrit un dispositif de surveillance de nanoparticules produites dans un réacteur à pyrolyse laser utilisant une analyse LIBS.

Le document US 4,443,072 décrit un appareil à fenêtre purgée utilisant des gaz de purge chauffés.

Le document US 2007/0075051 décrit un dispositif à plasma.

### Présentation

L'invention a pour objectif de pallier au moins l'un des inconvénients de l'art antérieur présentés ci-dessus à titre d'exemple.

Pour cela, l'invention concerne une cellule de caractérisation pour analyse de fumée, par spectrométrie optique comprenant :
- une chambre de réaction ;
- un orifice d'entrée pour l'arrivée de la fumée à l'intérieur de la chambre de réaction ;
- un orifice de sortie pour l'évacuation de la fumée hors de la chambre de réaction ;
- un hublot d'analyse pour l'entrée d'un faisceau laser destiné à former le plasma à l'intérieur de la chambre de réaction ; et un suffleur (16); caractérisé en ce que le souffleur est configuré pour assurer un balayage de gaz inerte au voisinage du hublot d'analyse ; et la cellule comprend en outre:
- un injecteur de gainage configuré pour l'injection gainée de la fumée à l'intérieur de la chambre de réaction, le gainage étant assuré par un jet de gaz inerte autour de la fumée.

L'avantage est que le signal obtenu en sortie (lumière émise par le plasma et traversant le hublot d'analyse) est stabilisé par rapport à l'art antérieur.

D'autres caractéristiques optionnelles de la cellule sont :
- la cellule comprend en outre un bras s'étendant à partir de la chambre de réaction et dont une extrémité libre est fermée par le hublot d'analyse, ce bras étant formé de deux parties de sections droites différentes, la partie de section plus grande étant disposée du côté du hublot d'analyse et la partie de section plus petite étant disposée du côté de la chambre de réaction pour former un venturi et assurer une surpression du côté du hublot ;
- le débit de gaz inerte engendré par le souffleur et le venturi est ajustable ;
- le débit de gaz inerte engendré par l'injecteur de gainage coaxial est ajustable ;
- l'injecteur est une double buse circulaire présentant deux orifices coaxiaux un premier ayant une section en forme de disque pour l'arrivée de la fumée et un deuxième ayant une section en forme d'anneau qui entoure le premier pour l'arrivée d'un gaz inerte ; et
- un hublot de visualisation est prévu pour l'observation du plasma produit à l'intérieur de la chambre de réaction lors de son fonctionnement.

L'invention concerne également un système de caractérisation comprenant une cellule telle que décrite ci-dessus et en outre un collecteur en aval de l'orifice de sortie de la cellule récupérant la poudre après analyse de celle-ci et un régulateur de pression pour maintenir la pression constante dans la chambre de réaction de la cellule.

D'autres caractéristiques optionnelles du système sont :
- le régulateur de pression comprend une vanne de régulation placée en aval du collecteur pour compenser la perte de charge due à un colmatage des filtres de celui-ci ;
- la vanne de régulation est reliée à une sonde de pression placée dans la cellule pour son asservissement ; et
- le souffleur assure également un balayage de gaz inerte au voisinage du hublot de visualisation.

### Présentation des dessins

D'autres objectifs, caractéristiques et avantages apparaîtront à la lecture de la description détaillée qui suit en référence aux dessins donnés à titre illustratif et non limitatif, parmi lesquels :
- la figure 1 est une représentation schématisée d'une cellule LIBS conventionnelle ;
- la figure 2 représente schématiquement la formation de plasmas secondaires dans une cellule LIBS conventionnelle ;
- la figure 3 représente schématiquement un exemple de cellule de caractérisation objet de l'invention intégrée dans un système de caractérisation ;
- la figure 4 représente schématiquement un venturi tel qu'utilisé dans la cellule de caractérisation de la figure 3 ;
- la figure 5 représente schématiquement un gainage de la fumée tel qu'utilisé dans la cellule de caractérisation de la figure 3 ;
- la figure 6 est graphe représentant l'intensité du signal mesuré en fonction d'un débit de balayage à l'intérieur de la cellule de caractérisation de la figure 3 et d'un débit de gainage de la fumée ; et
- la figure 7 est un graphe représentant la répétabilité du signal mesuré en fonction du balayage à l'intérieur de la cellule de caractérisation de la figure 3 et d'un débit de gainage de la fumée.

### Description détaillée

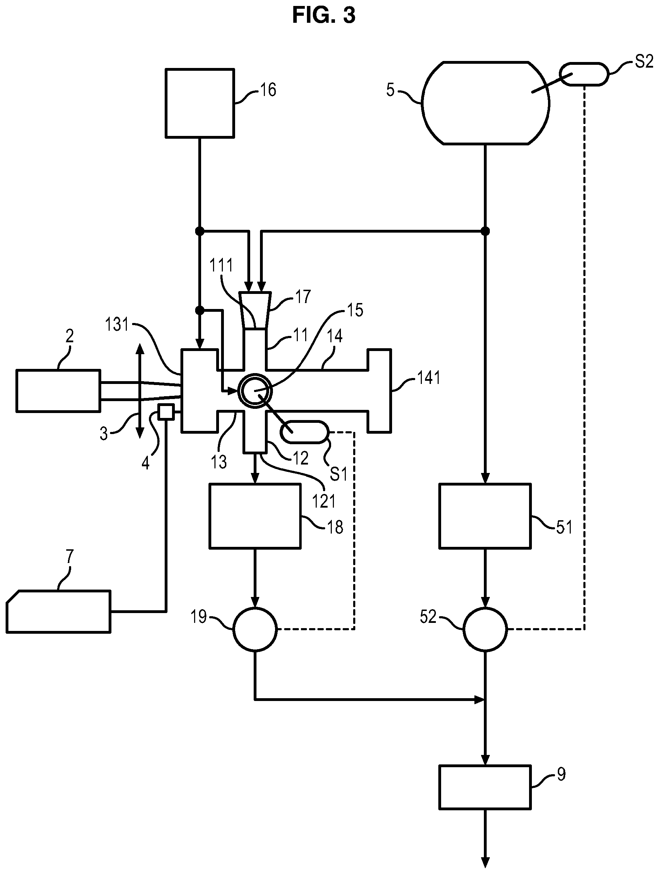

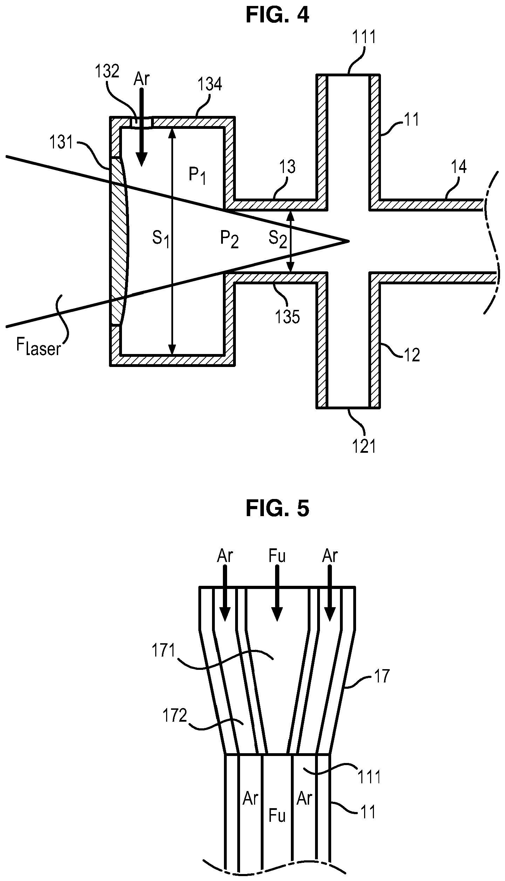

En référence aux figures 3 et 4, un exemple de mode de réalisation d'une cellule de caractérisation proposé est décrit ci-après. Dans cet exemple, la cellule de caractérisation est un système LIBS.

La cellule LIBS pour l'analyse de fumée par plasma créé par laser comprend une cellule LIBS **1**.

La cellule LIBS **1** comporte une chambre de réaction dans laquelle le plasma est formé, un premier bras **11** avec à son extrémité libre un orifice d'entrée **111** pour l'arrivée de la fumée à l'intérieur de la chambre de réaction, un deuxième bras **12** avec à son extrémité libre un orifice de sortie **121** pour l'évacuation de la fumée hors de la chambre de réaction. Les orifices d'entrée **111** et de sortie **121** peuvent être opposés et sont disposés de manière avantageuse respectivement sur la partie supérieure et la partie inférieure de la cellule LIBS **1**.

La cellule LIBS **1** comprend encore un troisième bras **13** fermé par un hublot **131** d'analyse pour l'entrée d'un faisceau laser **Fₗₐₛₑᵣ** destiné à former le plasma à l'intérieur de la chambre de réaction.

En face du troisième bras **13** peut être prévu un quatrième bras **14** fermé par un cache **141**.

Les quatre bras **11**, **12, 13** et **14** peuvent être avantageusement disposés en croix, ainsi le faisceau entrant par le hublot **131** d'analyse intersecte la fumée entrant par l'orifice d'entrée **111** et sortant par l'orifice de sortie **121** opposé à ce dernier.

Le faisceau laser **Fₗₐₛₑᵣ** peut ablater le matériau formant la cellule LIBS **1**. Le quatrième bras **14** est donc choisi plus long que le troisième bras **13**. Ainsi, les particules qui résultent de l'ablation par le faisceau laser **Fₗₐₛₑᵣ** du cache **141** du quatrième bras **14** risquent moins de polluer les mesures faites sur la fumée.

La cellule LIBS **1** peut aussi comprendre un hublot **15** de visualisation pour permettre à un opérateur d'observer l'intérieur de la chambre de réaction à l'œil nu ou au moyen d'un dispositif de visualisation, par exemple une caméra vidéo reliée à un écran. Ce hublot **15** de visualisation peut être disposé sur la cellule LIBS **1** de manière à ce que l'angle de visée à travers le hublot **15** de visualisation soit perpendiculaire à la direction incidente du faisceau laser **Fₗₐₛₑᵣ** à l'intérieur de la chambre de réaction et/ou au flux d'arrivée de la fumée à travers l'orifice d'entrée **111.**

La cellule LIBS comprend en outre un souffleur **16** pour assurer un balayage de gaz inerte au voisinage d'au moins le hublot **131** d'analyse.

Cela permet de réduire la quantité de fumée au voisinage du hublot **131** d'analyse diminuant par là-même l'encrassement du hublot **131** d'analyse.

Le souffleur 16 peut être une pompe connectée par des tuyaux à un réservoir de gaz inerte, par exemple de l'argon, d'un côté, et de l'autre à un orifice **132** d'admission de gaz inerte situé dans le troisième bras **13** au voisinage de son extrémité fermée par le hublot **131** d'analyse.

Afin d'augmenter l'efficacité du flux de gaz inerte au voisinage du hublot **131** d'analyse, le troisième bras **13** peut avoir la forme d'un venturi, comme illustré sur la figure 4, *i.e.* le troisième bras **13** est divisé en deux parties de sections **S1, S2** différentes. La première partie **134,** du côté de son extrémité libre, possède une section **S1** plus grande que la section **S2** de la deuxième partie **135** du côté de la chambre de réaction. Une surpression **ΔP** est alors engendrée dans la première partie **134** limitant encore la quantité de fumée au voisinage du hublot **131** d'analyse.

Le souffleur **16** peut encore être connecté à un orifice d'admission situé au voisinage de l'extrémité du quatrième bras **14** qui est fermé par un cache. Ceci permet d'équilibrer les flux de gaz d'argon à l'intérieur de la cellule LIBS 1.

Le souffleur **16** peut encore être connecté à un orifice d'admission situé au voisinage du hublot **15** de visualisation. On réduit alors là également l'encrassement du hublot **15** de visualisation. Dans ce cas, afin d'équilibrer les flux de gaz inerte à l'intérieur de la cellule LIBS **1,** un balayage peut également être assuré de la même manière du côté opposé au hublot **15** de visualisation.

Le débit de gaz inerte du souffleur **16** peut être ajustable.

La cellule LIBS comprend encore un injecteur **17** pour l'injection gainée coaxiale de la fumée à l'intérieur de la chambre de réaction, le gainage étant assuré par un jet de gaz inerte coaxial à la fumée et entourant celle-ci.

Le gainage de la fumée permet de confiner celle-ci à l'intérieur de la chambre de réaction. Ainsi, la fumée de nanoparticules n'aura pas tendance à occuper tout l'espace disponible à l'intérieur de la cellule LIBS 1 et notamment vers le hublot **131** d'analyse et le hublot **15** de visualisation. On évite en outre la formation de plasmas secondaires en dehors du point de focalisation du faisceau laser **Fₗₐₛₑᵣ.**

L'injecteur **17** peut être, comme illustré sur la figure 5, une double buse **17** tronconique présentant deux orifices coaxiaux **171** et **172,** un premier **171** avec une section en forme de disque pour l'arrivée de la fumée **Fu** et un deuxième **172** avec une section de forme annulaire entourant le premier **171** orifice pour l'arrivée du gaz inerte.

Ainsi le gaz inerte injecté entoure la fumée qui est confinée à l'intérieur du cylindre formé par le gaz inerte. Le gaz inerte est par exemple de l'argon Ar.

La cellule LIBS 1 peut faire partie d'un système LIBS comprenant en outre un collecteur LIBS **18** en aval de l'orifice de sortie **121** de la cellule LIBS 1 et un régulateur **19** de pression pour maintenir la pression constante dans la chambre de réaction.

Le régulateur **19** de pression peut être une vanne de régulation placée en aval du collecteur LIBS **18** pour compenser la perte de charge due au colmatage des filtres de celui-ci. La vanne de régulation LIBS **19** est reliée à une sonde **S1** de pression placée à l'intérieur de la cellule LIBS **1** pour y mesurer la pression. Un asservissement est prévu pour commander la vanne de régulation LIBS **19** en fonction de la pression mesurée à l'intérieur de la cellule LIBS **1**. La vanne de régulation LIBS **19** s'ouvre progressivement au fur et à mesure que le collecteur LIBS **18** se colmate à cause des fumées.

Le système LIBS comprend encore un réacteur **5** pour la génération de fumée telle que décrite dans la partie arrière plan technologique. La sortie du réacteur **5** est reliée à une pompe 9 qui engendre un flux de fumée.

À la sortie du réacteur **5**, la fumée est conduite en partie vers la cellule LIBS **1** et en partie vers un collecteur **5**1 du réacteur. En sortie du collecteur **5**1 est disposée une vanne de régulation **5**2 pour réguler la pression à l'intérieur du réacteur **5** qui doit être maintenue constante. La vanne de régulation **52** est reliée à une sonde **S2** de pression placée à l'intérieur du réacteur **5** pour y mesurer la pression. Un asservissement est prévu pour commander la vanne de régulation **52** en fonction de la pression mesurée à l'intérieur du réacteur 5. La vanne de régulation **52** s'ouvre progressivement au fur et à mesure que les filtres du collecteur **51** du réacteur **5** se colmatent à cause des nanoparticules.

Les collecteurs **18** et **51** recueillent les nanoparticules de la fumée afin que celles-ci ne soient pas rejetées dans l'atmosphère.

Les flux de gaz en sortie des vannes de régulation **19** et **52** se rejoignent et sont conduits vers la pompe **9**.

La présence de la vanne de régulation LIBS **19** est nécessaire pour conserver un signal observé stable. En effet, en l'absence de la vanne de régulation LIBS **19,** le colmatage du collecteur **51** du réacteur provoque l'ouverture de la vanne de régulation **52** augmentant le débit dans la voie hors cellule LIBS et diminuant le débit dans la voie de la cellule LIBS. Dans le même temps, le collecteur LIBS **18** se colmate également, ce qui fait varier la pression dans la voie de la cellule LIBS et donc à l'intérieur de la cellule LIBS **1**. La diminution du débit et la variation de la pression dans la voie de la cellule LIBS rend alors le plasma produit instable.

### Exemple de fonctionnement

En fonctionnement, la pression à l'intérieur du réacteur **5** est maintenue en dessous de la pression atmosphérique afin d'éviter que les nanoparticules produites s'échappent dans l'atmosphère ambiante, par exemple, la pression est asservie à 900 mbar.

Le réacteur **5** est paramétré afin d'avoir une production de 400 g/h de nanoparticules. La pompe **9** impose un débit de 160 m³/h.

Il faut éviter d'avoir une perte de charge entre la voie hors LIBS et la voie de la cellule LIBS trop importante. En effet, ceci est néfaste pour la stabilité du plasma à générer.

Ainsi, la pression à l'intérieur de la cellule LIBS **1** peut être asservie à 850 mbar. Le débit global de gaz inerte (argon) utilisé pour le balayage des hublots **131** et **15** et du gainage de la fumée est de 30 L/min réparti de la manière suivante : 20 L/min pour le balayage des hublots **131** et **15** et 10 L/min pour le gainage.

Le laser **2** utilisé est un laser nanoseconde de type Nd:YAG. L'énergie par impulsion du laser **2** est réglée à 50 mJ. Une lentille convergente **3** est positionnée entre le laser **2** et le hublot **131** d'analyse. Le laser **2** et la lentille convergente **3** sont positionnés de manière à ce que le point de focalisation du faisceau laser **Fₗₐₛₑᵣ** émis par le laser **2** se situe au croisement entre les quatre bras **11**, **12**, **13** et **14**, soit sous le flux d'arrivée de la fumée, et en regard du hublot **15** de visualisation si celui-ci est prévu sur la cellule LIBS **2**.

Le signal émis par le plasma est collecté par le système optique 4 placé en sortie, face au hublot **131** d'analyse. Le système optique 4 envoie le signal collecté à un spectromètre 7 qui analyse le spectre du signal émis (qui est la lumière du plasma).

Les dimensions de la cellule sont (de l'extrémité des bras au centre de la cellule, c'est-à-dire. où le plasma est créé) :

| | |
|---|---|
| - premier bras 11 : | 53 mm |
| - deuxième bras 12 : | 160 mm |
| - troisième bras 13 : | 50 mm |
| - quatrième bras 14 : | 100 mm |

### Test comparatifs

Des tests comparatifs ont été menés sur une cellule LIBS dont les dimensions ont été présentées ci-dessus pour mesurer l'effet combiné du gainage et du balayage.

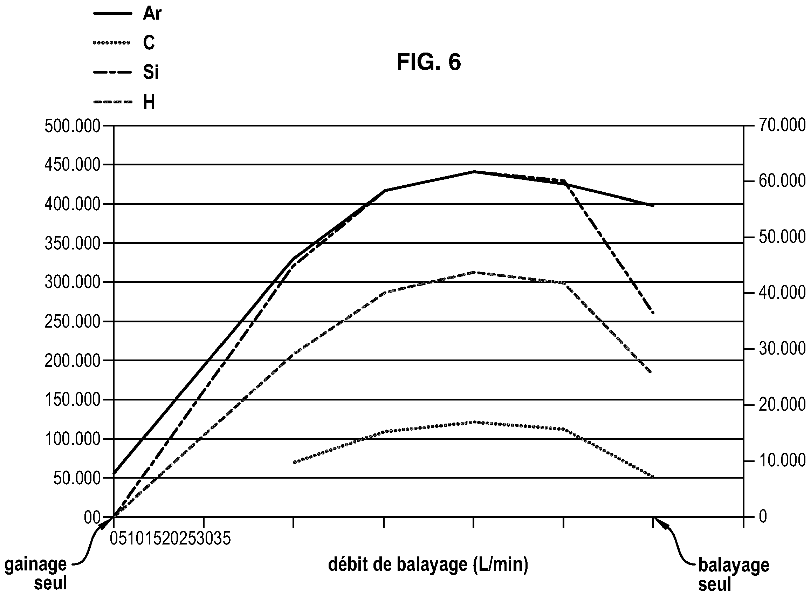

Sur la figure 6, est représenté un graphe illustrant l'intensité du signal mesuré (en unité arbitraire) en fonction du débit de balayage utilisé (en L/min) pour quatre éléments différents : le silicium Si, l'hydrogène H, l'argon Ar et le carbone C.

L'intensité du signal pour le silicium Si et l'hydrogène H se lit sur l'échelle des ordonnées à gauche. L'intensité du signal pour l'argon Ar et le carbone C se lit sur l'échelle des ordonnées à droite.

Le débit de gainage est choisi de sorte que le débit combiné du gainage et du balayage soit de 30 L/min.

Ainsi, si le débit de balayage est de 0 L/min, le débit de gainage est de 30 L/min. Si le débit de balayage est de 10 L/min, le débit de gainage est de 20 L/min.

La figure 6 montre donc qu'avec le gainage seul (débit de balayage nul), les intensités des signaux pour les quatre éléments sont beaucoup plus faibles que pour un débit de gainage de 10 L/min (soit un débit de balayage de 20 L/min).

Cette figure 6 montre encore qu'avec le balayage seul (débit de gainage nul), les intensités des signaux pour les quatre éléments sont plus faibles que pour un débit de gainage de 10 L/min (soit un débit de balayage de 20 L/min).

Les conditions de débit de gainage à 10 L/min et de débit de balayage à 20 L/min sont proches de l'optimum et permettent d'obtenir des intensités de signal proches du maximum.

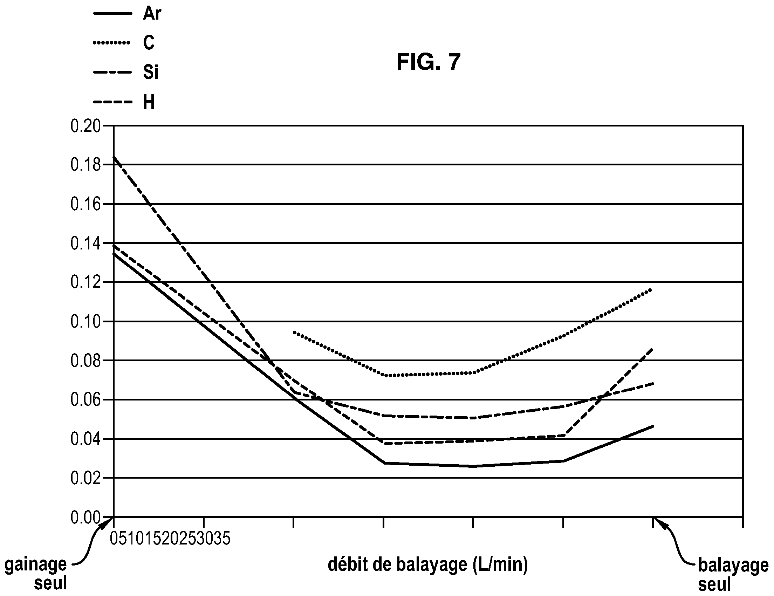

La figure 7 montre l'effet combiné du gainage et du balayage sur la répétabilité du signal.

La répétabilité est donnée en ordonnée pour quatre éléments (les mêmes que pour la figure 6) et est exprimée en écart-type relatif de l'intensité des raies calculé sur cinquante spectres, un spectre résultant de l'intégration du signal sur trente tirs du laser. Plus l'écart-type est faible et meilleure est la répétabilité.

Le débit de gainage est choisi de sorte que le débit combiné du gainage et du balayage soit de 30 L/min.

On constate que la répétabilité des signaux mesurés est meilleure quand le gainage et le balayage sont combinés par rapport à l'utilisation du gainage seul ou du balayage seul avec une valeur faible traduisant une grande répétabilité. Quand le débit de balayage est de 20 L/min et celui de gainage de 10 L/min la répétabilité est proche du minimum.

Les deux figures 6 et 7 montrent donc que l'effet du gainage seul et du balayage seul ne s'additionnent pas, mais bien plus, la qualité des signaux s'en retrouve améliorée de manière inattendue.

Bien que la description ait été faite en référence à une cellule LIBS, d'autres cellules sont possibles, notamment celles adaptées pour les spectrométries suivantes :
- la fluorescence induite par laser ;
- la spectrométrie de fluorescence ;
- la spectrométrie d'absorption ;
- la spectrométrie Raman ; et
- la spectrométrie infrarouge.

## Revendications

1. Cellule de caractérisation pour analyse de fumée, par spectrométrie optique comprenant :
- une chambre de réaction ;
- un orifice (111) d'entrée pour l'arrivée de la fumée (Fu) à l'intérieur de la chambre de réaction ;
- un orifice (121) de sortie pour l'évacuation de la fumée (Fu) hors de la chambre de réaction ;
- un hublot (131) d'analyse pour l'entrée d'un faisceau laser (Fₗₐₛₑᵣ) destiné à former le plasma à l'intérieur de la chambre de réaction ; et
- un souffleur (16); **caractérisée en ce que**: le souffleur (16) est configuré pour assurer un balayage de gaz inerte au voisinage du hublot (131) d'analyse ; et la cellule comprend en outre:
- un injecteur (17) configuré pour l'injection gainée coaxiale de la fumée à l'intérieur de la chambre de réaction, le gainage étant assuré par un jet du même gaz inerte coaxial à la fumée et entourant celle-ci.

2. Cellule selon la revendication 1, comprenant en outre un bras (13) s'étendant à partir de la chambre de réaction et dont une extrémité libre est fermée par le hublot (131) d'analyse, ce bras étant formé de deux parties (134, 135) de sections droites différentes, la partie (134) de section plus grande étant disposée du côté du hublot (131) d'analyse et la partie (135) de section plus petite étant disposée du côté de la chambre de réaction pour former un venturi et assurer une surpression du côté du hublot (131).

3. Cellule selon la revendication 1 ou 2, dans laquelle le débit de gaz inerte engendré par le souffleur (16) et éventuellement le venturi est ajustable.

4. Cellule selon l'une des revendications 1 à 3, dans laquelle le débit de gaz inerte engendré par l'injecteur (17) est ajustable.

5. Cellule selon l'une des revendications 1 à 4, dans laquelle l'injecteur (17) est une double buse circulaire présentant deux orifices coaxiaux (171, 172), un premier (171) ayant une section en forme de disque pour l'arrivée de la fumée et un deuxième (172) ayant une section en forme d'anneau qui entoure le premier (171) pour l'arrivée d'un gaz inerte.

6. Cellule selon l'une des revendications 1 à 5, comprenant en outre un hublot (15) de visualisation pour l'observation du plasma produit à l'intérieur de la chambre de réaction lors de son fonctionnement.

7. Cellule selon l'une des revendications 1 à 6, dans laquelle le gaz inerte est de l'argon.

8. Cellule selon l'une des revendications 1 à 7, dans laquelle un signal émis par le plasma est collecté par un système optique (4) placé en sortie, face au hublot (131) d'analyse.

9. Système de caractérisation comprenant une cellule selon l'une des revendications 1 à 8, et en outre un collecteur (18) en aval de l'orifice de sortie (121) de la cellule (1) récupérant des nanoparticules de la fumée après son analyse et un régulateur de pression (19) pour maintenir la pression constante dans la chambre de réaction de la cellule (1).

10. Système selon la revendication 9, dans lequel le régulateur de pression (19) comprend :
une vanne de régulation placée en aval du collecteur pour compenser la perte de charge due à un colmatage des filtres de celui-ci.

11. Système selon la revendication 10, dans lequel la vanne de régulation (19) est reliée à une sonde de pression (S1) placée dans la cellule (1) pour son asservissement.

12. Système selon les revendications 11 et 6, dans lequel le souffleur (16) est configuré pour assurer également un balayage de gaz inerte au voisinage du hublot (15) de visualisation.

## Patentansprüche

1. Charakterisierungszelle für Rauchanalyse durch optische Spektrometrie, umfassend:
- eine Reaktionskammer;
- eine Eingangsöffnung (111) für die Ankunft des Rauchs (Fu) im Inneren der Reaktionskammer;
- eine Ausgangsöffnung (121) für die Ausleitung des Rauchs (Fu) aus der Reaktionskammer;
- ein Analysefenster (131) für den Eingang eines Laserstrahls (Fₗₐₛₑᵣ), der bestimmt ist, das Plasma im Inneren der Reaktionskammer zu bilden; und
- ein Gebläse (16);
**dadurch gekennzeichnet, dass**:
das Gebläse (16) ausgelegt ist, um eine Inertgasabastung in der Nähe des Analysefensters (131) sicherzustellen; und die Zelle ferner umfasst:
- einen Injektor (17), der für die koaxiale umhüllte Einleitung des Rauchs in das Innere der Reaktionskammer ausgelegt ist, wobei die Umhüllung von einem Strahl desselben, zum Rauch koaxialen Inertgases sichergestellt wird und diesen umgibt.

2. Zelle nach Anspruch 1, umfassend ferner einen Arm (13), der sich ab der Reaktionskammer erstreckt und von dem ein freies Ende durch das Analysefenster (131) verschlossen ist, wobei dieser Arm aus zwei Teilen (134, 135) mit unterschiedlichen geraden Querschnitten gebildet ist, wobei der Teil (134) mit dem größeren Querschnitt auf der Seite des Analysefensters (131) angeordnet ist und der Teil (135) mit dem kleineren Querschnitt auf der Seite der Reaktionskammer angeordnet ist, um ein Venturi zu bilden und um einen Überdruck auf der Seite des Fensters (131) sicherzustellen.

3. Zelle nach Anspruch 1 oder 2, wobei der von dem Gebläse (16) und eventuell dem Venturi erzeugte Inertgasdurchsatz einstellbar ist.

4. Zelle nach einem der Ansprüche 1 bis 3, wobei der von dem Injektor (17) erzeugte Inertgasdurchsatz einstellbar ist.

5. Zelle nach einem der Ansprüche 1 bis 4, wobei der Injektor (17) eine kreisförmige Doppeldüse ist, die zwei koaxiale Öffnungen (171, 172) aufweist, wobei eine erste (171) einen scheibenförmigen Querschnitt für die Ankunft des Rauchs und eine zweite (172) einen ringförmigen Querschnitt, die die erste (171) umgibt, für die Ankunft eines Inertgases hat.

6. Zelle nach einem der Ansprüche 1 bis 5, umfassend ferner ein Visualisierungsfenster (15) für die Beobachtung des im Inneren der Reaktionskammer bei ihrem Betrieb produzierten Plasmas.

7. Zelle nach einem der Ansprüche 1 bis 6, wobei das Inertgas Argon ist.

8. Zelle nach einem der Ansprüche 1 bis 7, wobei ein von dem Plasma gesendetes Signal von einem optischen System (4) gesammelt wird, das am Ausgang gegenüber dem Analysefenster (131) platziert ist.

9. Charakterisierungssystem, umfassend eine Zelle nach einem der Ansprüche 1 bis 8 und ferner einen der Ausgangsöffnung (121) der Zelle (1) nachgeordneten Sammler (18), der Nanopartikel des Rauchs nach dessen Analyse zurückgewinnt und einen Druckregler (19), um den Druck in der Reaktionskammer der Zelle (1) konstant zu halten.

10. System nach Anspruch 9, wobei der Druckregler (19) umfasst:
ein Regulierventil, das dem Sammler nachgeordnet platziert ist, um den Lastverlust aufgrund einer Verstopfung der Filter desselben zu kompensieren.

11. System nach Anspruch 10, wobei das Regulierventil (19) mit einer Drucksonde (S1) verbunden ist, die in der Zelle (1) für deren Steuerung platziert ist.

12. System nach den Ansprüchen 11 und 6, wobei das Gebläse (16) ausgelegt ist, um ebenfalls eine Inertgasabtastung in der Nähe des Visualisierungsfensters (15) sicherzustellen.

## Claims

1. Characterisation cell for smoke analysis, by optical spectrometry comprising:
- a reaction chamber;
- an inlet orifice (111) for the inlet of smoke (Fᵤ) inside the reaction chamber;
- an outlet orifice (121) for the evacuation of smoke (Fᵤ) from the reaction chamber;
- an analysis window (131) for entry of a laser beam (Fₗₐₛₑᵣ) intended to form the plasma inside the reaction chamber; and
- a fan (16);
**characterised in that**:
the fan (16) is configured for ensuring scanning of inert gas in the vicinity of the analysis window (131); and
the cell also comprises:
- an injector (17) configured for coaxial shielded injection of smoke inside the reaction chamber, the shielding being ensured by a jet of the same inert gas coaxial and surrounding the smoke.

2. The cell as claimed in Claim 1, also comprising an arm (13) extending from the reaction chamber and one free end of which is closed by the analysis window (131), this arm being formed in two parts (134, 135) of different straight cross-sections, the larger cross-section part (134) being arranged to the side of the analysis window (131) and the smaller cross-section part (135) being arranged to the side of the reaction chamber to form a Venturi and to ensure overpressure to the side of the window (131).

3. The cell as claimed in Claim 1 or 2, in which the flow rate of inert gas generated by the fan (16) and optionally the Venturi is adjustable.

4. The cell as claimed in any one of Claims 1 to 3, in which the flow rate of inert gas generated by the injector (17) is adjustable.

5. The cell as claimed in any one of Claims 1 to 4, in which the injector (17) is a circular double nozzle having two coaxial orifices (171, 172), a first (171) having a disc-shaped cross-section for the inlet of smoke, and a second (172) having a ringshaped cross-section which encloses the first orifice (171) for the inlet of inert gas.

6. The cell as claimed in any one of Claims 1 to 5, also comprising a viewing window (15) for observation of the plasma produced inside the reaction chamber during its operation.

7. Cell as claimed in any one of Claims 1 to 6, in which the inert gas is argon.

8. Cell as claimed in any one of Claims 1 to 7, in which a signal emitted by the plasma is collected by an optical system (4) placed at outlet, facing the analysis window (131).

9. A characterisation system comprising a cell as claimed in any one of Claims 1 to 8, and also a collector (18) downstream of the outlet orifice (121) of the cell (1) recovering nanoparticles from smoke after its analysis and a pressure regulator (19) for keeping the pressure constant in the reaction chamber of the cell (1).

10. The system as claimed in Claim 9, in which the pressure regulator (19) comprises:
a regulation valve placed downstream of the collector to compensate the loss of charge due to clogging of the filters of the latter.

11. The system as claimed in Claim 10, in which the regulation valve (19) is connected to a pressure probe (S1) placed in the cell (1) for its servo-control.

12. The system as claimed in Claim 11 and 6, in which the fan (16) is configured to also ensure scanning of inert gas in the vicinity of the viewing window (15).
